(19) **Europäisches Patentamt**
**European Patent Office**
**Office européen des brevets**

(11) **EP 3 866 231 A1**

(12) **EUROPEAN PATENT APPLICATION**
published in accordance with Art. 153(4) EPC

(43) Date of publication:
**18.08.2021 Bulletin 2021/33**

(51) Int Cl.:
*H01M 4/46* (2006.01)     *H01M 4/134* (2010.01)
*H01M 10/0566* (2010.01)     *C22C 21/00* (2006.01)

(21) Application number: **19871880.1**

(22) Date of filing: **03.10.2019**

(86) International application number:
**PCT/JP2019/039065**

(87) International publication number:
**WO 2020/075616 (16.04.2020 Gazette 2020/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.10.2018 JP 2018192026**

(71) Applicant: **SUMITOMO CHEMICAL COMPANY LIMITED**
**Chuo-ku**
**Tokyo 104-8260 (JP)**

(72) Inventors:
• **YAMAGUCHI, Takitaro**
  **Tsukuba-shi, Ibaraki 300-3294 (JP)**
• **HOSHIKAWA, Hiroaki**
  **Niihama-shi, Ehime 792-8521 (JP)**

(74) Representative: **Vossius & Partner**
**Patentanwälte Rechtsanwälte mbB**
**Siebertstraße 3**
**81675 München (DE)**

(54) **NEGATIVE ELECTRODE ACTIVE MATERIAL FOR NONAQUEOUS ELECTROLYTE SECONDARY BATTERY, NEGATIVE ELECTRODE, BATTERY, AND ALUMINUM CLAD METAL LAMINATE**

(57) An anode active material for a nonaqueous electrolyte secondary battery, which is made of an aluminum-containing metal having an average corrosion rate of 0.15 mm/year or less measured by an immersion test under specific immersion conditions.

EP 3 866 231 A1

**Description**

[Technical Field]

The present invention relates to an anode active material for a nonaqueous electrolyte secondary battery, an anode, a battery, and an aluminum clad metal laminate.
Priority is claimed on Japanese Patent Application No. 2018-192026, filed October 10, 2018, the content of which is incorporated herein by reference.

[Background Art]

Rechargeable secondary batteries have been already in practical use not only for small power sources in mobile phone applications, notebook personal computer applications, and the like but also for medium-sized and large-sized power sources in automotive applications, power storage applications, and the like.
Various attempts have been made to improve the battery characteristics of a nonaqueous electrolyte secondary battery. For example, Patent Document 1 describes an anode for a lithium organic secondary battery in which a lithium sheet and a cured aluminum sheet or a cured aluminum alloy sheet are superposed and electrochemically alloyed in the presence of an electrolytic solution.

[Citation List]

[Patent Document]

[Patent Document 1]

Japanese Examined Patent Application, Second Publication No. H6-30246

[Summary of Invention]

[Technical Problem]

There is still room for improvement in an anode active material for a nonaqueous electrolyte secondary battery in order to improve battery characteristics such as a discharge capacity retention ratio.
The present invention has been made in view of the above circumstances, and an object thereof is to provide an anode active material for a nonaqueous electrolyte secondary battery having a high discharge capacity retention ratio, an anode using the same, and a battery using the same.

[Solution to Problem]

The present invention includes the following [1] to [10].

[1] An anode active material for a nonaqueous electrolyte secondary battery, the anode active material including: an aluminum-containing metal having an average corrosion rate of less than 0.20 mm/year measured by an immersion test under the following immersion conditions.

[Immersion Conditions]
Immersion solution: 3.5% NaCl aqueous solution adjusted to a pH of 3 using acetic acid as a pH adjuster, immersion temperature: 30°C
Immersion time: 72 hours

[2] An anode active material for a nonaqueous electrolyte secondary battery, the anode active material including: an aluminum-containing metal having an average corrosion rate of 0.15 mm/year or less measured by an immersion test under the following immersion conditions.

[Immersion Conditions]
Immersion solution: 3.5% NaCl aqueous solution adjusted to a pH of 3 using acetic acid as a pH adjuster, immersion temperature: 30°C
Immersion time: 72 hours

[3] The anode active material for a nonaqueous electrolyte secondary battery according to [1] or [2], in which the aluminum-containing metal is represented by Composition Formula (10),

$$Al_xM^{10}{}_yM^2{}_z \qquad ...(10)$$

(in Formula (10), $M^{10}$ is one or more selected from the group consisting of Mg, Ni, Mn, Zn, Cd, Pb, Si, Sr, and Ga, $M^2$ is an unavoidable impurity, and 0 mass% $\leq y \leq$ 8 mass% and [x / (x + z)] $\geq$ 99 mass% are satisfied).
[4] The anode active material for a nonaqueous electrolyte secondary battery according to [1] or [2], in which the aluminum-containing metal is represented by Composition Formula (1),

$$Al_xM^1{}_yM^2{}_z \qquad ...(1)$$

(in Formula (1), $M^1$ is one or more selected from the group consisting of Mg, Ni, Mn, Zn, Cd, and Pb, $M^2$ is an unavoidable impurity, and 0 mass% $\leq y \leq$ 8 mass% and [x / (x + z)] $\geq$ 99.9 mass% are satisfied).
[5] The anode active material for a nonaqueous electrolyte secondary battery according to any one of [1] to [4], in which the aluminum-containing metal is a metal foil having a thickness of 5 $\mu$m or more and 200 $\mu$m or less.
[6] The anode active material for a nonaqueous electrolyte secondary battery according to any one of [1] to [4], in which the aluminum-containing metal is a powder having an average particle size of 1 $\mu$m or more and 20 $\mu$m or less.
[7] The anode active material for a nonaqueous electrolyte secondary battery according to any one of [1] to [4], in which the aluminum-containing metal is a non-woven fabric made of aluminum fibers.
[8] An anode including: the anode active material for a nonaqueous electrolyte secondary battery according to any one of [1] to [7].
[9] A battery including: the anode according to [8].
[10] An aluminum clad metal laminate including: a thin layer and a substrate which are laminated, in which the thin layer is formed of the anode active material for a nonaqueous electrolyte secondary battery according to any one of [1] to [4], and the substrate is made of a metal different from the anode active material for a nonaqueous electrolyte secondary battery.

[Advantageous Effects of Invention]

According to the present invention, it is possible to provide an anode active material for a nonaqueous electrolyte secondary battery having a high discharge capacity retention ratio, an anode using the same, and a battery using the same.

[Brief Description of Drawings]

Fig. 1A is a schematic configuration view showing an example of a lithium-ion secondary battery.
Fig. 1B is a schematic configuration view showing an example of the lithium-ion secondary battery.
Fig. 2 is a graph showing charge/discharge curves of batteries using anodes manufactured in examples.
Fig. 3 is a graph showing charge/discharge curves of batteries using anodes manufactured in comparative examples.

[Description of Embodiments]

<Anode Active Material for Nonaqueous Electrolyte Secondary Battery>

An anode active material for a nonaqueous electrolyte secondary battery of the present embodiment is made of an aluminum-containing metal. "Anode active material for nonaqueous electrolyte secondary battery" may be described as "anode active material".
The anode active material of the present embodiment is formed of a material having high resistance to corrosion. A material having high corrosion resistance is a material that is less likely to be affected by oxidation and reduction. The anode active material formed of such a material tends to maintain its initial properties even in a case of where charging and discharging are repeated. Therefore, a good discharge capacity retention ratio can be achieved.
In the present specification, the "discharge capacity retention ratio" means the ratio of a discharge capacity (numerator) to a charge capacity (denominator) during each charging or discharging.
The present embodiment is an anode active material for a nonaqueous electrolyte secondary battery, which is made of an aluminum-containing metal having an average corrosion rate of less than 0.20 mm/year measured by an immersion test under the following immersion conditions.

Another aspect of the present embodiment is made of an aluminum-containing metal having an average corrosion rate of 0.15 mm/year or less as measured by an immersion test under the following immersion conditions.

[Immersion Conditions]

The aluminum-containing metal is formed into a test metal piece having a size of 40 mm in length, 40 mm in width, and 0.5 mm in thickness.
The test metal piece is immersed in a 3.5% NaCl aqueous solution adjusted to a pH of 3 using acetic acid as a pH adjuster, and the test metal piece is taken out after 72 hours. The immersion temperature is set to 30°C.
The degree of corrosion is represented by the amount of corrosion loss per day for a surface area of 1 mm$^2$ of the test metal piece in mg. That is, the degree of corrosion can be calculated by the following expression. A precision balance is used for measuring the mass.

$$\text{Degree of corrosion} = (\text{mass before immersion of test metal piece (mg)} - \text{mass after immersion of test metal piece (mg)}) / (\text{surface area of test metal piece (mm}^2) \times \text{number of test days (day)})$$

From the obtained degree of corrosion, the corrosion rate is calculated by the following method.

$$\text{Corrosion rate (mm/year)} = [\text{degree of corrosion} \times 365] / \text{test piece density (g/cm}^3)$$

The test metal piece may be washed with ethanol or the like before being immersed in the 3.5% NaCl aqueous solution adjusted to a pH of 3.
The anode active material of the present embodiment is made of an aluminum-containing metal represented by Composition Formula (1).

$$Al_x M^1_y M^2_z \qquad \qquad ...(1)$$

(in Formula (1), $M^1$ is one or more selected from the group consisting of Mg, Ni, Mn, Zn, Cd, and Pb, $M^2$ is an unavoidable impurity, and 0 mass% $\leq y \leq$ 8 mass% and [x / (x + z)] $\geq$ 99.9 mass% are satisfied).

• $M^1$

In Formula (1), $M^1$ is more preferably one or more selected from the group consisting of Mg, Ni, Mn, and Zn.

• y

In Formula (1), 0.1 mass% $\leq y \leq$ 8.0 mass% is preferable, 0.5 mass% $\leq y \leq$ 7.0 mass% is preferable, and 0.7 mass% $\leq y \leq$ 6.0 mass% is particularly preferable.
When the range of y is equal to or more than the above lower limit, the average corrosion rate can be controlled within the range of the present invention. In addition, when the range of y is equal to or less than the above upper limit, rolling can be performed without cracking during a rolling step at the time of casting.

• $M^2$

In Formula (1), $M^2$ is an unavoidable impurity such as a production residue that is unavoidably incorporated in a refining step of high-purity aluminum, and specifically, is a metal component other than aluminum and $M^1$. Examples of the unavoidable impurity include iron and copper.
In Formula (1), z is 0.1 mass% or less, preferably 0.05 mass% or less, and even more preferably 0.01 mass% or less.
In Formula (1), [x / (x + z)] is preferably 99.95% or more, more preferably 99.99% or more, and particularly preferably 99.995% or more. The anode active material of the present embodiment contains highly pure aluminum in which [x / (x + z)] is equal to or more than the above lower limit. A refining method for purifying aluminum will be described later.

Among the aluminum-containing metals represented by Formula (1), those having y = 0 may be described as high-purity aluminum. Among the aluminum-containing metals represented by Formula (1), those having y exceeding 0 may be described as a high-purity aluminum alloy.

An anode active material of an aspect of the present embodiment is made of an aluminum-containing metal represented by the following composition formula (10),

$$Al_x M^{10}_y M^2_z \qquad ...(10)$$

(in Composition Formula (10), $M^{10}$ is one or more selected from the group consisting of Mg, Ni, Mn, Zn, Cd, Pb, Si, Sr, and Ga, $M^2$ is an unavoidable impurity, and 0 mass% $\leq$ y $\leq$ 8 mass% and [x / (x + z)] $\geq$ 99 mass% are satisfied).

• $M^{10}$

In Composition Formula (10), $M^{10}$ is more preferably one or more selected from the group consisting of Mg, Si, Sr, and Ga.

In Composition Formula (10), description regarding $M^2$, x, y, and z is the same as the description regarding $M^2$, x, y, and z in Composition Formula (1).

In the present embodiment, the aluminum-containing metal represented by Composition Formula (1) or Composition Formula (10) is preferably the following high-purity aluminum or high-purity aluminum alloy.

(A) High-purity aluminum-magnesium alloy 1

An alloy of 99.999% pure aluminum and magnesium. The amount of magnesium is 0.1 mass% or more and 4.0 mass% or less in the total amount of aluminum-containing metal. The average corrosion rate is 0.04 mm/year to 0.06 mm/year.

(B) High-purity aluminum-magnesium alloy 2

An alloy of 99.9% pure aluminum and magnesium. The amount of magnesium is 0.1 mass% or more and 1.0 mass% or less in the total amount of aluminum-containing metal. The average corrosion rate is 0.1 mm/year to 0.14 mm/year.

(C) High-purity aluminum-nickel alloy

An alloy of 99.999% pure aluminum and nickel. The amount of nickel is 0.1 mass% or more and 1.0 mass% or less in the total amount of aluminum-containing metals. The average corrosion rate is 0.1 mm/year to 0.14 mm/year.

(D) High-purity aluminum-manganese-magnesium alloy

An alloy of 99.99% pure aluminum, manganese, and magnesium. The total amount of manganese and magnesium is 1.0 mass% or more and 2.0 mass% or less in the total amount of aluminum-containing metals. The average corrosion rate is 0.03 mm/year to 0.05 mm/year.

(E) High-purity aluminum

99.999% pure aluminum. The average corrosion rate is 0.05 mm/year.

(F) High-purity aluminum-magnesium-silicon alloy 1

An alloy of 99.8% pure aluminum, magnesium, and silicon. The total amount of magnesium and silicon is 0.1 mass% or more and 1.0 mass% or less in the total amount of aluminum-containing metals. The average corrosion rate is 0.05 mm/year to less than 0.20 mm/year.

(G) High-purity aluminum-magnesium-silicon alloy 2

An alloy of 99.999% pure aluminum, magnesium, and silicon. The total amount of magnesium and silicon is 0.1 mass% or more and 1.0 mass% or less in the total amount of aluminum-containing metals. The average corrosion rate is 0.05 mm/year to less than 0.20 mm/year.

(H) High-purity aluminum-strontium alloy

An alloy of 99.999% pure aluminum and strontium. The amount of strontium is 100 ppm or more and 1000 ppm or less in the total amount of aluminum-containing metal. The average corrosion rate is 0.03 mm/year to 0.05 mm/year.

(I) High-purity aluminum-gallium alloy

An alloy of 99.999% pure aluminum and gallium. The amount of gallium is 500 ppm or more and 1200 ppm or less in the total amount of aluminum-containing metal. The average corrosion rate is 0.03 mm/year to 0.06 mm/year.

• Aluminum purification method

Examples of a refining method for purifying aluminum used in the present embodiment include a segregation method and a three-layer electrolytic method.

The segregation method is a purification method utilizing the segregation phenomenon during solidification of molten aluminum, and a plurality of methods have been put into practical use. As one form of the segregation method, there is a method of pouring molten aluminum into a container, and allowing refined aluminum to solidify from the bottom portion while heating and stirring the molten aluminum at the upper portion while rotating the container. By the segregation method, high-purity aluminum having a purity of 99.99 mass% or more can be obtained.

The three-layer electrolytic method is an electrolytic method for purifying aluminum. As one form of the three-layer electrolytic method, first, aluminum or the like having a relatively low purity (for example, a grade of a purity of 99.9 mass% in JIS-H2102) is put into an Al-Cu alloy layer. Thereafter, in the method, with an anode in a molten state, an electrolytic bath containing, for example, aluminum fluoride and barium fluoride is disposed thereon, and high-purity aluminum is deposited on a cathode.

High-purity aluminum having a purity of 99.999 mass% or more can be obtained by the three-layer electrolytic method.

The method for purifying aluminum is not limited to the segregation method and the three-layer electrolytic method, and other known methods such as a zone melting refining method and an ultra-high vacuum melting method may be used.

Although the aluminum used in the present embodiment has high purity, impurities such as production residues may be mixed. In this case, for example, the total amount of iron and copper contained in the aluminum is preferably 100 ppm or less, more preferably 80 ppm or less, and even more preferably 50 ppm or less.

• Method of Manufacturing Aluminum-Containing Metal
• • Method of Manufacturing High-Purity Aluminum

(Casting Step)

The aluminum purified by the above-described method can be cast or cut to obtain an aluminum ingot having a shape suitable for rolling.

In a case where casting is performed, for example, a treatment of melting the high-purity aluminum at about 680°C or higher and 800°C or lower to remove gas and non-metallic inclusions for cleaning (for example, vacuum treatment of molten aluminum) is performed.

The vacuum treatment is performed, for example, at 700°C or higher and 800°C or lower for 1 hour or longer and 10 hours or shorter under the condition of a degree of vacuum of 0.1 Pa or more and 100 Pa or less.

As a treatment for cleaning the molten aluminum, a treatment of blowing a flux, an inert gas, or chlorine gas can also be used. The molten alloy cleaned by the vacuum treatment or the like is usually cast in a mold to obtain an ingot.

As the mold, one made of iron or graphite heated to 50°C or higher and 200°C or lower is used. The high-purity aluminum of the present embodiment can be cast by a method of pouring a molten alloy of 680°C or higher and 800°C or lower.

Alternatively, an ingot can also be obtained by continuous casting which is generally used.

(Rolling Step)

The obtained ingot of aluminum can be directly cut and used as a battery member. If the ingot is rolled, extruded, or forged into a sheet material or a mold material, the ingot can be easily used as a clad material.

In the rolling of the ingot, for example, hot rolling and cold rolling are performed to process the ingot into a sheet material or foil shape. As for the temperature condition under which the hot rolling is performed, for example, the temperature of an aluminum ingot or an aluminum alloy ingot is set to 350°C or higher and 450°C or lower.

In the rolling, the material is repeatedly passed between a pair of rolling rolls to be finished into a target sheet thickness. Passing between the pair of rolling rolls is referred to as a "pass".

A working ratio r per pass (one pass) is a sheet thickness reduction ratio when passing through the rolling rolls once, and is calculated by the following expression.

$$r = (T_0 - T) / T_0 \times 100$$

($T_0$ : thickness before passing through the rolling rolls, and T: thickness after passing through the rolling rolls)
In the present embodiment, it is preferable to repeat the rolling until the aluminum ingot or the aluminum alloy ingot reaches the target thickness under the condition that the working ratio r is 2% or more and 20% or less.

After the hot rolling, an intermediate annealing treatment may be performed before the cold rolling.

In the intermediate annealing treatment, for example, the hot-rolled aluminum ingot or an aluminum alloy ingot may be heated to 350°C or higher and 450°C or lower, and allowed to cool immediately after the temperature rise.

Alternatively, the aluminum ingot or the aluminum alloy ingot may be allowed to cool after being held for about 1 hour or longer and 5 hours or shorter.

By this treatment, the material of the aluminum ingot or the aluminum alloy ingot is softened, and a state in which cold rolling is easy is obtained.

The cold rolling is repeatedly performed, for example, at a temperature lower than the recrystallization temperature of aluminum, usually from room temperature to 80°C or lower, under the condition of a working ratio r of 1% or more and 10% or less for a die of one pass, until the aluminum ingot has a desired thickness.

A heat treatment step may be performed after the cold rolling. The heat treatment step can be performed in an air atmosphere and an oxygen atmosphere. Alternatively, the heat treatment step may be performed in a nitrogen atmosphere while controlling the oxygen concentration to 0.1% or more and 3% or less. In the present embodiment, the air atmosphere is preferable, and a dry air is more preferable.

For example, the heat treatment temperature of the heat treatment step is preferably 200°C or higher and 600°C or lower, more preferably 250°C or higher and 550°C or lower, and particularly preferably 350°C or higher and 500°C or lower.

The heat treatment time of the heat treatment step is preferably 60 minutes or longer and 1200 minutes or shorter, more preferably 120 minutes or longer and 600 minutes or shorter, and particularly preferably 180 minutes or longer and 480 minutes or shorter.

In addition to softening of the work-hardened sheet material by the heat treatment step, there are cases where various physical properties are adjusted by controlling the crystal structure.

• • Method of Manufacturing High-Purity Aluminum Alloy

(Casting Step)

A casting step is performed by the same method as the method of manufacturing high-purity aluminum described above.

A high-purity aluminum alloy can be obtained by adding a predetermined amount of metal elements such as Mg, Ni, Mn, Zn, Cd, Pb, Si, Sr, and Ga at the time of melting in the above-mentioned casting step. The metal containing these elements to be added preferably has a purity of 99 mass% or more.

(Rolling Step)

A rolling step is performed by the same method as the method of manufacturing high-purity aluminum described above.

In the present embodiment, the thickness of the metal foil or the aluminum-containing metal is preferably 5 μm or more, more preferably 6 μm or more, and even more preferably 7 μm or more. In addition, the thickness is preferably 200 μm or less, more preferably 190 μm or less, and even more preferably 180 μm or less. The upper limit and the lower limit thereof can be randomly combined. In the present embodiment, the thickness is preferably 5 $\mu$m or more and 200 $\mu$m or less.

In the present embodiment, the thickness of the metal foil may be measured using a thickness gauge or a caliper.

In the present embodiment, the aluminum-containing metal may be a powder having an average particle size of 1 $\mu$m or more and 20 $\mu$m or less. This can be obtained by crushing the ingot obtained by the above casting step. The crushing method is not particularly limited, and a method using a ball mill, a bead mill, or the like and a method using a jet mill or the like may be used.

A method of manufacturing the powder is not particularly limited, and for example, the powder can be manufactured by an atomizing method in which molten aluminum is ejected from a nozzle.

In the present embodiment, the aluminum-containing metal may be a non-woven fabric made of aluminum fibers. The non-woven fabric made of aluminum is obtained by adopting a method of obtaining aluminum fibers by the "melt spinning method" in which molten high-purity aluminum is pressurized and ejected from a nozzle to rapidly cool and solidify to manufacture fibers and then rolling the ejected cotton-like fibers with rolls. Examples of the aluminum fibers include aluminum fibers having a diameter of 5 $\mu$m or more and 200 $\mu$m, aluminum short fibers, and the like.

<Anode and Battery>

Next, an anode using the anode active material of the present invention as the anode active material of a battery and a secondary battery having the anode will be described while describing the configuration of the battery.

Hereinafter, a lithium secondary battery using a lithium positive electrode active material for the positive electrode will be described as an example.

An example of the lithium secondary battery of the present embodiment includes a positive electrode, an anode, a separator interposed between the positive electrode and the anode, and an electrolytic solution disposed between the positive electrode and the anode.

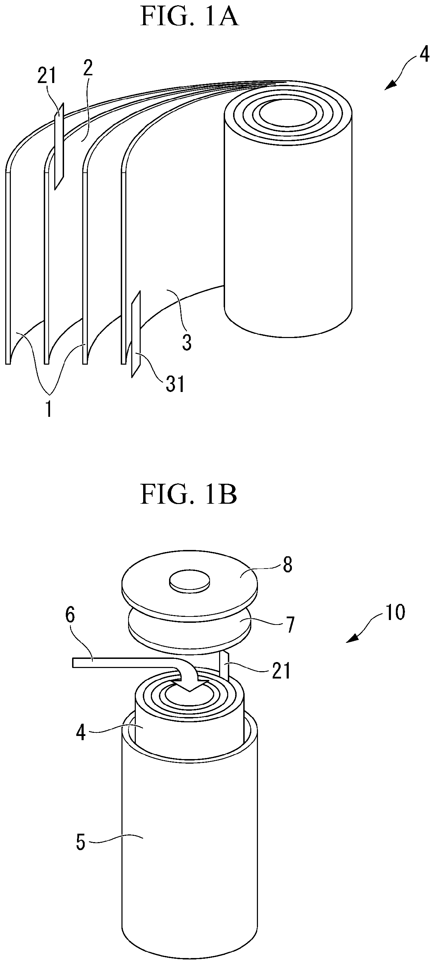

Figs. 1A and 1B are schematic views showing an example of the lithium secondary battery of the present embodiment. A cylindrical lithium secondary battery 10 of the present embodiment is manufactured as follows.

First, as shown in Fig. 1A, a pair of separators 1 having a strip shape, a strip-shaped positive electrode 2 having a positive electrode lead 21 at one end, and a strip-shaped anode 3 having an anode lead 31 at one end are stacked in order of the separator 1, the positive electrode 2, the separator 1, and the anode 3 and are wound to form an electrode group 4.

Next, as shown in Fig. 1B, the electrode group 4 and an insulator (not shown) are accommodated in a battery can 5, the can bottom is then sealed, the electrode group 4 is impregnated with an electrolytic solution 6, and an electrolyte is disposed between the positive electrode 2 and the anode 3. Furthermore, the upper portion of the battery can 5 is sealed with a top insulator 7 and a sealing body 8, whereby the lithium secondary battery 10 can be manufactured.

The shape of the electrode group 4 is, for example, a columnar shape such that the cross-sectional shape when the electrode group 4 is cut in a direction perpendicular to the winding axis is a circle, an ellipse, a rectangle, or a rectangle with rounded corners.

In addition, as a shape of the lithium secondary battery having the electrode group 4, a shape defined by IEC60086 which is a standard for a battery defined by the International Electrotechnical Commission (IEC), or by JIS C 8500 can be adopted. For example, shapes such as a cylindrical shape and a square shape can be adopted.

Furthermore, the lithium secondary battery is not limited to the wound type configuration, and may have a stacked type configuration in which a stacked structure of a positive electrode, a separator, an anode, and a separator is repeatedly stacked. A so-called coin type battery, a button type battery, and a paper type (or sheet type) battery are exemplary examples of the stacked type lithium secondary battery.

Hereinafter, each configuration will be described in order.

(Positive Electrode)

The positive electrode of the present embodiment can be manufactured by first adjusting a positive electrode mixture containing a positive electrode active material, a conductive material, and a binder, and causing a positive electrode current collector to hold the positive electrode mixture.

(Positive Electrode Active Material)

As the positive electrode active material, a material containing a lithium-containing compound or another metal compound can be used. Examples of the lithium-containing compound include a lithium cobalt composite oxide having a layered structure, a lithium nickel composite oxide having a layered structure, and a lithium manganese composite oxide having a spinel structure.

Examples of the other metal compounds include oxides such as titanium oxide, vanadium oxide, and manganese dioxide, and sulfides such as titanium sulfide and molybdenum sulfide.

(Conductive Material)

A carbon material can be used as the conductive material included in the positive electrode of the present embodiment. As the carbon material, there are graphite powder, carbon black (for example, acetylene black), a fibrous carbon material, and the like. Carbon black is fine particles and has a large surface area. Therefore, the addition of a small amount of carbon black to the positive electrode mixture increases the conductivity inside the positive electrode and thus improves the charge and discharge efficiency and output characteristics. However, when the carbon black is added too much, both the binding force between the positive electrode mixture and the positive electrode current collector by the binder and the binding force inside the positive electrode mixture decrease, which causes an increase in internal resistance.

The proportion of the conductive material in the positive electrode mixture is preferably 5 parts by mass or more and 20 parts by mass or less with respect to 100 parts by mass of the positive electrode active material. In a case of using a fibrous carbon material such as graphitized carbon fiber or carbon nanotube as the conductive material, it is possible to reduce the proportion of the conductive material in the positive electrode mixture.

(Binder)

A thermoplastic resin can be used as the binder included in the positive electrode of the present embodiment.

As the thermoplastic resin, fluorine resins such as polyvinylidene fluoride (hereinafter, sometimes indicated as PVdF), polytetrafluoroethylene (hereinafter, sometimes indicated as PTFE), tetrafluoroethylene-hexafluoropropylene-vinylidene fluoride copolymers, hexafluoropropylene-vinylidene fluoride copolymers, and tetrafluoroethylene-perfluorovinyl ether copolymers; and polyolefin resins such as polyethylene and polypropylene can be adopted.

These thermoplastic resins may be used as a mixture of two or more. By using a fluorine resin and a polyolefin resin as the binder and setting the ratio of the fluorine resin to the entire positive electrode mixture to 1 mass% or more and 10 mass% or less and the ratio of the polyolefin resin to 0.1 mass% or more and 2 mass% or less, a positive electrode mixture having both high adhesion to the positive electrode current collector and high bonding strength in the positive electrode mixture can be obtained.

(Positive Electrode Current Collector)

As the positive electrode current collector included in the positive electrode of the present embodiment, a strip-shaped member formed of a metal material such as Al, Ni, or stainless steel as the forming material can be used. Among these, as the current collector, from the viewpoint of easy processing and low cost, it is preferable to use Al as the forming material and process Al into a thin film.

Alternatively, the same aluminum foil used for the anode may be used.

As a method of causing the positive electrode current collector to hold the positive electrode mixture, a method of press-forming the positive electrode mixture on the positive electrode current collector can be adopted. In addition, the positive electrode mixture may be held by the positive electrode current collector by forming the positive electrode mixture into a paste using an organic solvent, applying the paste of the positive electrode mixture to at least one side of the positive electrode current collector, drying the paste, and pressing the paste to be fixed.

In a case of forming the positive electrode mixture into a paste, as the organic solvent which can be used, amine solvents such as N,N-dimethylaminopropylamine and diethylenetriamine; ether solvents such as tetrahydrofuran; ketone solvents such as methyl ethyl ketone; ester solvents such as methyl acetate; and amide solvents such as dimethylacetamide and N-methyl-2-pyrrolidone (hereinafter, sometimes indicated as NMP) can be adopted.

Examples of a method of applying the paste of the positive electrode mixture to the positive electrode current collector include a slit die coating method, a screen coating method, a curtain coating method, a knife coating method, a gravure coating method, and an electrostatic spraying method.

The positive electrode can be manufactured by the method mentioned above.

(Anode)

The anode active material of the present embodiment is used for the anode included in the lithium secondary battery of the present embodiment.

(Anode Current Collector)

As an anode current collector included in the anode, a strip-shaped member formed of a metal material, such as Cu, Ni, and stainless steel, as the forming material can be adopted. Among these, as the material of the current collector, it is preferable to use Cu as the forming material and process Cu into a thin film because Cu is less likely to form an alloy with lithium and can be easily processed.

In a case where the anode active material is a powder, as a method of causing the anode current collector to hold an anode mixture, similarly to the case of the positive electrode, a method of press-forming an anode mixture containing the anode active material and a binder, or a method of forming the anode mixture into a paste using a solvent or the like, applying the paste onto the anode current collector, drying the paste, and pressing the paste to be compressed can be adopted.

In addition, a conductive material may further be added to the anode mixture. As the conductive material, those mentioned as the conductive material of the positive electrode material can be used.

(Separator)

As the separator included in the lithium secondary battery of the present embodiment, for example, a material having a form such as a porous film, non-woven fabric, or woven fabric made of a material such as a polyolefin resin such as polyethylene and polypropylene, a fluorine resin, and a nitrogen-containing aromatic polymer can be used. In addition, two or more of these materials may be used to form the separator, or these materials may be stacked to form the separator.

In the present embodiment, the air resistance of the separator according to the Gurley method defined by JIS P 8117 is preferably 50 sec/100 cc or more and 300 sec/100 cc or less, and more preferably 50 sec/100 cc or more and 200 sec/100 cc or less in order for the electrolyte to favorably permeate therethrough during battery use (during charging and discharging).

In addition, the porosity of the separator is preferably 30 vol% or more and 80 vol% or less, and more preferably 40 vol% or more and 70 vol% or less. The separator may be a laminate of separators having different porosities.

(Electrolytic Solution)

The electrolytic solution included in the lithium secondary battery of the present embodiment contains an electrolyte and an organic solvent.

As the electrolyte contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, Li-BOB (here, BOB refers to bis(oxalato)borate), LiFSI (here, FSI refers to bis(fluorosulfonyl)imide), lower aliphatic carboxylic acid lithium salts, and $LiAlCl_4$ can be adopted, and a mixture of two or more of these may be used. Among these, as the electrolyte, it is preferable to use at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$, which contain fluorine.

As the organic solvent contained in the electrolytic solution, for example, carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and $\gamma$-butyrolactone; nitriles such as acetonitrile and butyronitrile; amides such as N,N-dimethylformamide and N,N-dimethylacetamide; carbamates such as 3-methyl-2-oxazolidone; and sulfur-containing compounds such as sulfolane, dimethyl sulfoxide, and 1,3-propanesultone, or those obtained by introducing a fluoro group into these organic solvents (those in which one or more of the hydrogen atoms of the organic solvent are substituted with a fluorine atom) can be used.

As the organic solvent, it is preferable to use a mixture of two or more thereof. Among these, a mixed solvent containing a carbonate is preferable, and a mixed solvent of a cyclic carbonate and a non-cyclic carbonate and a mixed solvent of a cyclic carbonate and an ether are more preferable. As the mixed solvent of a cyclic carbonate and a non-cyclic carbonate, a mixed solvent containing ethylene carbonate, dimethyl carbonate, and ethyl methyl carbonate is preferable. An electrolytic solution using such a mixed solvent has a wide operating temperature range, is less likely to deteriorate even when charged and discharged at a high current rate, and is less likely to deteriorate even during a long-term use.

Furthermore, as the electrolytic solution, it is preferable to use an electrolytic solution containing a lithium salt containing fluorine such as $LiPF_6$ and an organic solvent having a fluorine substituent in order to enhance the safety of the obtained lithium secondary battery. A mixed solvent containing ethers having a fluorine substituent, such as pentafluoropropyl methyl ether and 2,2,3,3-tetrafluoropropyl difluoromethyl ether and dimethyl carbonate is even more preferable because the capacity retention ratio is high even when charging or discharging is performed at a high current rate.

A solid electrolyte may be used instead of the electrolytic solution. As the solid electrolyte, for example, an organic polymer electrolyte such as a polyethylene oxide-based polymer compound, or a polymer compound containing at least one or more of a polyorganosiloxane chain or a polyoxyalkylene chain can be used. A so-called gel type in which a nonaqueous electrolytic solution is held in a polymer compound can also be used. Inorganic solid electrolytes containing sulfides such as $Li_2S$-$SiS_2$, $Li_2S$-$GeS_2$, $Li_2S$-$P_2S_5$, $Li_2S$-$B_2S_3$, $Li_2S$-$SiS_2$-$Li_3PO_4$, $Li_2S$-$SiS_2$-$Li_2SO_4$, and $Li_2S$-$GeS_2$-$P_2S_5$ can be adopted, and a mixture or two or more thereof may also be used. By using these solid electrolytes, the safety of the lithium secondary battery may be further enhanced.

In addition, in a case of using a solid electrolyte in the battery of the present embodiment, there may be cases where the solid electrolyte plays a role of the separator, and in such a case, the separator may not be required.

<Aluminum Clad Metal Laminate>

The present embodiment is an aluminum clad metal laminate in which a thin layer and a substrate are laminated. The thin layer is formed of the anode active material for a nonaqueous electrolyte secondary battery of the present embodiment. The substrate is made of a metal different from the metal forming the thin layer.

The aluminum clad metal laminate of the present embodiment includes the thin layer on one side or both sides of the substrate. The metal forming the thin layer is the anode active material for a nonaqueous electrolyte secondary battery made of the aluminum-containing metal of the present embodiment described above.

As the metal forming the substrate, a metal that is not alloyed with aluminum or lithium is used. Examples of such a metal include copper, nickel, and stainless steel.

As the metal forming the substrate, a metal that is less likely to be alloyed with aluminum or lithium can also be used. Examples of such a metal include aluminum having low corrosion resistance. Examples of aluminum as the metal forming the substrate include those having an aluminum purity of 99.9% or less. The corrosion resistance of such aluminum is such that the average corrosion rate measured by the above-mentioned immersion test is 0.20 mm/year or more.

The aluminum clad metal laminate of the present embodiment can be manufactured by superposing the thin layer and the substrate, and rolling and joining the resultant while applying a pressure to be diffusion-annealed. The temperature of diffusion annealing may be, for example, 150°C or higher and 550°C or lower. Cold working may be performed after the rolling joining.

[Examples]

Next, the present invention will be described in more detail with reference to examples.

<Component Analysis of High-Purity Aluminum or Aluminum Alloy>

The amount of metal elements in aluminum was quantified using an emission spectrometer (model: ARL-4460, manufactured by Thermo Fisher Scientific Co., Ltd.). The metal elements can be more accurately quantified by a glow discharge mass spectrometer.

<Measurement of Average Corrosion Rate>

[Immersion Conditions]

The aluminum-containing metal was formed into a test metal piece having a size of 40 mm in length, 40 mm in width, and 0.5 mm in thickness. The surface of the test metal piece was washed with ethanol. The test metal piece was immersed in a 3.5% NaCl aqueous solution adjusted to a pH of 3 using acetic acid as a pH adjuster, and the test metal piece was taken out after 72 hours. The immersion temperature was set to 30°C.

The degree of corrosion was represented by the amount of corrosion loss per day for a surface area of 1 mm$^2$ of the test metal piece in mg. That is, the degree of corrosion was calculated by the following expression. A precision balance or the like was used for measuring the mass.

$$\text{Degree of corrosion} = (\text{mass before immersion of test metal piece (mg)} - \text{mass}$$

$$\text{after immersion of test metal piece (mg)}) / (\text{surface area of test metal piece} \times \text{number of}$$

$$\text{test days})$$

From the obtained degree of corrosion, the corrosion rate was calculated by the following method.

$$\text{Corrosion rate (mm/year)} = [\text{degree of corrosion} \times 365] / \text{test piece density}$$

$$(\text{g/cm}^3)$$

<<Example 1>>

[Production of Anode]

High-purity aluminum (purity: 99.999% or more) and magnesium were melted at 750°C to obtain molten aluminum-magnesium. Next, the molten aluminum-magnesium was subjected to a vacuum treatment by being held at a temperature of 720°C for 2 hours under the condition of a degree of vacuum of 50 Pa. The molten aluminum-magnesium after the vacuum treatment was cast in a cast iron mold (22 mm × 150 mm × 200 mm) at 150°C to obtain an ingot.
Rolling was performed under the following conditions. After both surfaces of the ingot were subjected to scalping by 2 mm, cold rolling was performed from a thickness of 18 mm at a working ratio of 99.9%. The thickness of the obtained rolled material was 100 μm.
A high-purity aluminum-magnesium alloy foil (thickness 100 μm) having an aluminum purity of 99.999% and a magnesium content of 3.7 mass% was cut into a disk shape of φ14 mm to manufacture an anode.
The average corrosion rate of the high-purity aluminum-magnesium alloy foil having an aluminum purity of 99.999% and a magnesium content of 3.7 mass% was 0.06 mm/year.

[Production of Counter Electrode]

A lithium foil having a purity of 99.9% (thickness 300 μm: Honjo Chemical) was cut into a disk shape of φ16 mm to manufacture a counter electrode.

[Production of Electrolytic Solution]

In a mixed solvent prepared by mixing ethylene carbonate (EC) and diethyl carbonate (DEC) at EC:DEC = 30:70 (volume ratio), $LiPF_6$ was dissolved to 1 mol/liter to produce an electrolytic solution.

[Production of Nonaqueous Electrolyte Secondary Battery]

A polyethylene porous separator was disposed between the anode and the counter electrode and accommodated in a battery case (standard 2032), the above electrolytic solution was injected, and the battery case was sealed, whereby a coin type (half cell) nonaqueous electrolyte secondary battery having a diameter of 20 mm and a thickness of 3.2 mm was produced.

[Charge/Discharge Evaluation: Initial Charge/Discharge]

The separator was sufficiently impregnated with the electrolytic solution by allowing the coin type nonaqueous electrolyte secondary battery to stand at room temperature for 10 hours.
Next, an initial charge/discharge was performed by performing constant current charging (occlusion of Li in Al) to 0.005 V at 0.5 mA at room temperature, then performing constant current constant voltage charging for 5 hours for constant voltage charging to 0.005 V, and thereafter performing constant current discharging for discharging (release of Li from Al) to 2.0 V at 0.5 mA.

[Charge/Discharge Evaluation: Charge/Discharge Efficiency at Third Cycle]

After the initial charge/discharge, charging at 0.5 mA and discharging at 0.5 mA were repeated twice (three times in total from the initial charge/discharge) under the same conditions as in the initial charge/discharge.
The life was evaluated by three cycle tests, and the discharge capacity retention ratio after three cycles was calculated by the following expression.

$$\text{Discharge capacity retention ratio (\%) after three cycles} = \text{discharge capacity at}$$

$$\text{third cycle/charge capacity at third cycle} \times 100$$

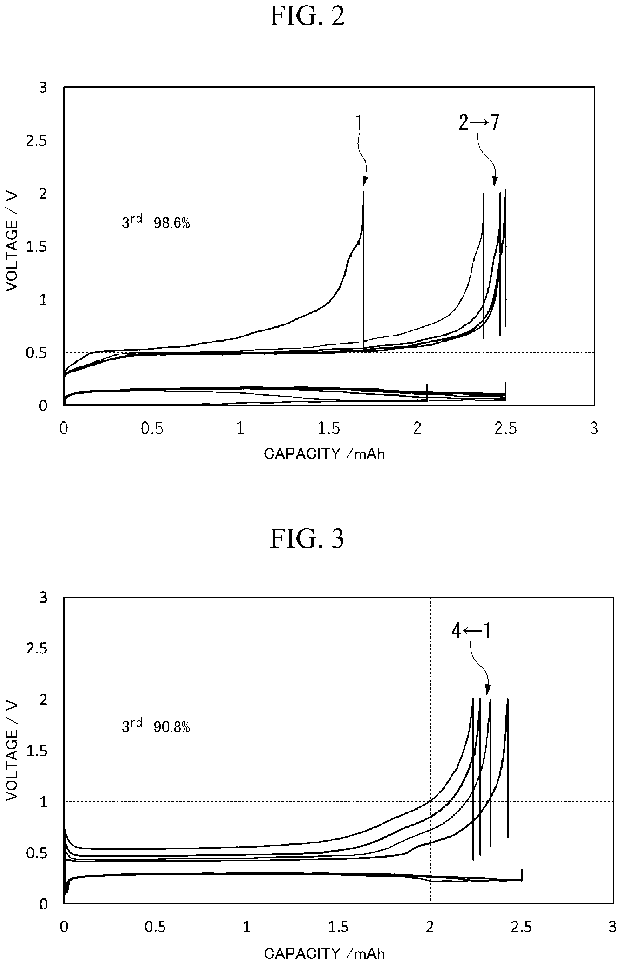

In Example 1, the discharge capacity retention ratio calculated by the above method was 98.6%. A charge/discharge curve is shown in Fig. 2.

<<Comparative Example 1>>

A coin type (half cell) nonaqueous electrolyte secondary battery was produced as in Example 1 except that an anode used was an aluminum foil (thickness 100 $\mu$m) having a purity of 99.8%, and evaluated.
The average corrosion rate of the aluminum foil having a purity of 99.8% was 0.22 mm/year.
In Comparative Example 1, the discharge capacity retention ratio calculated by the above method was 90.8%. A charge/discharge curve is shown in Fig. 3.

<<Example 2>>

A coin type (half cell) nonaqueous electrolyte secondary battery was produced as in Example 1 except that an anode used was an aluminum alloy foil (thickness 100 $\mu$m) having an aluminum purity of 99.999% and a magnesium content of 0.1 mass%, and evaluated.
The average corrosion rate of the aluminum alloy foil having an aluminum purity of 99.999% and a magnesium content of 0.1 mass% was 0.04 mm/year.
In Example 2, the discharge capacity retention ratio calculated by the above method was 98.4%.

<<Example 3>>

A coin type (half cell) nonaqueous electrolyte secondary battery was produced as in Example 1 except that an anode used was an aluminum alloy foil (thickness 100 $\mu$m) having an aluminum purity of 99.99%, a magnesium content of 0.15 mass%, and a manganese content of 1.4 mass%, and evaluated.
The average corrosion rate of the aluminum alloy foil having an aluminum purity of 99.99%, a magnesium content of 0.15 mass%, and a manganese content of 1.4 mass% was 0.04 mm/year.
In Example 3, the discharge capacity retention ratio calculated by the above method was 98.9%.

<<Example 4>>

A coin type (half cell) nonaqueous electrolyte secondary battery was produced as in Example 1 except that an anode used was an aluminum alloy foil (thickness 100 $\mu$m) having an aluminum purity of 99.999% and a nickel content of 0.1 mass%, and evaluated.
The average corrosion rate of the aluminum alloy foil having an aluminum purity of 99.999% and a nickel content of 0.1 mass% was 0.14 mm/year.
In Example 4, the discharge capacity retention ratio calculated by the above method was 96.8%.

<<Example 5>>

A coin type (half cell) nonaqueous electrolyte secondary battery was produced as in Example 1 except that an anode used was an aluminum alloy foil (thickness 100 $\mu$m) having an aluminum purity of 99.9% and a magnesium content of 0.1 mass%, and evaluated.
The average corrosion rate of the aluminum alloy foil having an aluminum purity of 99.9% and a magnesium content of 0.1 mass% was 0.12 mm/year.
In Example 5, the discharge capacity retention ratio calculated by the above method was 99.6%.

<<Example 6>>

A coin type (half cell) nonaqueous electrolyte secondary battery was produced as in Example 1 except that an anode used was an aluminum alloy foil (thickness 100 $\mu$m) having an aluminum purity of 99.8%, a magnesium content of 0.54 mass%, and a silicon content of 0.45 mass%, and evaluated.
The average corrosion rate of the aluminum alloy foil having an aluminum purity of 99.8%, a magnesium content of 0.54 mass%, and a silicon content of 0.45 mass% was 0.154 mm/year.
In Example 6, the discharge capacity retention ratio calculated by the above method was 97.1%.

<<Example 7>>

A coin type (half cell) nonaqueous electrolyte secondary battery was produced as in Example 1 except that an anode used was an aluminum alloy foil (thickness 100 $\mu$m) having an aluminum purity of 99.999%, a magnesium content of 0.53 mass%, and a silicon content of 0.42 mass%, and evaluated.
The average corrosion rate of the aluminum alloy foil having an aluminum purity of 99.999%, a magnesium content of 0.53 mass%, and a silicon content of 0.42 mass% was 0.073 mm/year.
In Example 7, the discharge capacity retention ratio calculated by the above method was 96.5%.

<<Example 8-1>>

A coin type (half cell) nonaqueous electrolyte secondary battery was produced as in Example 1 except that an anode used was an aluminum alloy foil (thickness 100 $\mu$m) having an aluminum purity of 99.999% and containing 800 ppm of strontium, and evaluated.
The average corrosion rate of the aluminum alloy foil having an aluminum purity of 99.999% and containing 800 ppm of strontium was 0.040 mm/year.
In Example 8-1, the discharge capacity retention ratio calculated by the above method was 98.0%.

<<Example 8-2>>

A coin type (half cell) nonaqueous electrolyte secondary battery was produced as in Example 8-1 except that an anode used was an aluminum alloy foil (thickness 100 $\mu$m) having an aluminum purity of 99.999% and containing 800 ppm of strontium, which was obtained by performing a heat treatment in an air atmosphere at 350°C for 180 minutes after a cold rolling step, and evaluated.
The average corrosion rate of the heat-treated aluminum alloy foil having an aluminum purity of 99.999% and containing 800 ppm of strontium was 0.041 mm/year.
In Example 8-2, the discharge capacity retention ratio calculated by the above method was 97.7%.

<<Example 9-1>>

A coin type (half cell) nonaqueous electrolyte secondary battery was produced as in Example 1 except that an anode used was an aluminum alloy foil (thickness 100 $\mu$m) having an aluminum purity of 99.999% and containing 1100 ppm of gallium, and evaluated.
The average corrosion rate of the aluminum alloy foil having an aluminum purity of 99.999% and containing 1100 ppm of gallium was 0.055 mm/year.
In Example 9-1, the discharge capacity retention ratio calculated by the above method was 96.7%.

<<Example 9-2>>

A coin type (half cell) nonaqueous electrolyte secondary battery was produced as in Example 9-1 except that an anode used was an aluminum alloy foil (thickness 100 $\mu$m) having an aluminum purity of 99.999% and containing 1100 ppm of gallium, which was obtained by performing a heat treatment in an air atmosphere at 350°C for 180 minutes after a cold rolling step, and evaluated.
The average corrosion rate of the heat-treated aluminum alloy foil having an aluminum purity of 99.999% and containing 1100 ppm of gallium was 0.044 mm/year.
In Example 9-2, the discharge capacity retention ratio calculated by the above method was 95.7%.
Table 1 below summarizes the average corrosion rate, aluminum purity, anode material, and discharge capacity retention ratio of Examples 1 to 5 and Comparative Example 1.
Table 2 below summarizes the average corrosion rate, aluminum purity, anode material, and discharge capacity retention ratio of Examples 6 and 7, 8-1 and 8-2, and 9-1 and 9-2.

[Table 1]

|  | Average corrosion rate (mm/year) | Aluminum purity (%) | Anode | Discharge capacity retention ratio (%) |
|---|---|---|---|---|
| Example 1 | 0.060 | 99.999 | Al-Mg alloy (Mg: 3.7 mass%) | 98.6 |
| Comparative Example 1 | 0.217 | 99.8 | Al | 90.8 |
| Example 2 | 0.041 | 99.999 | Al-Mg alloy (Mg: 0.1 mass%) | 98.4 |
| Example 3 | 0.043 | 99.99 | Al-Mg-Mn alloy (Mg: 0.15 mass%, Mn: 1.4 mass%) | 98.9 |
| Example 4 | 0.140 | 99.999 | Al-Ni alloy (Ni: 0.1 mass%) | 96.8 |
| Example 5 | 0.120 | 99.9 | Al-Mg alloy (Mg: 0.1 mass%) | 99.6 |

[Table 2]

|  | Average corrosion rate (mm/year) | Aluminum purity (%) | Anode | Discharge capacity retention ratio (%) |
|---|---|---|---|---|
| Example 6 | 0.154 | 99.8 | Al-Mg-Si (Mg: 0.54%, Si: 0.45%) | 97.1 |
| Example 7 | 0.073 | 99.999 | Al-Mg-Si (Mg: 0.53%, Si: 0.42%) | 96.5 |
| Example 8-1 | 0.040 | 99.999 | Al-Sr (800 ppm) | 98.0 |
| Example 8-2 | 0.041 | 99.999 | Al-Sr (800 ppm) | 97.7 |
| Example 9-1 | 0.055 | 99.999 | Al-Ga (1100 ppm) | 96.7 |
| Example 9-2 | 0.044 | 99.999 | Al-Ga (1100 ppm) | 95.7 |

As shown in the above results, the examples to which the present invention was applied had a higher discharge capacity retention ratio than the comparative examples.

[Reference Signs List]

1: Separator
2: Positive electrode
3: Anode
4: Electrode group
5: Battery can
6: Electrolytic solution
7: Top insulator
8: Sealing body
10: Battery
21: Positive electrode lead
31: Anode lead

**Claims**

1. An anode active material for a nonaqueous electrolyte secondary battery, the anode active material comprising:

   an aluminum-containing metal having an average corrosion rate of less than 0.20 mm/year measured by an immersion test under the following immersion conditions,
   [immersion conditions]
   immersion solution: 3.5% NaCl aqueous solution adjusted to a pH of 3 using acetic acid as a pH adjuster,
   immersion temperature: 30°C,
   immersion time: 72 hours.

2. An anode active material for a nonaqueous electrolyte secondary battery, the anode active material comprising:

   an aluminum-containing metal having an average corrosion rate of 0.15 mm/year or less measured by an immersion test under the following immersion conditions,
   [immersion conditions]
   immersion solution: 3.5% NaCl aqueous solution adjusted to a pH of 3 using acetic acid as a pH adjuster,
   immersion temperature: 30°C,
   immersion time: 72 hours.

3. The anode active material for a nonaqueous electrolyte secondary battery according to claim 1 or 2, wherein the aluminum-containing metal is represented by Composition Formula (10),

$$Al_xM^{10}{}_yM^2{}_z \qquad ...(10)$$

   (in Formula (10), $M^{10}$ is one or more selected from the group consisting of Mg, Ni, Mn, Zn, Cd, Pb, Si, Sr, and Ga, $M^2$ is an unavoidable impurity, and 0 mass% $\leq y \leq$ 8 mass% and $[x / (x + z)] \geq$ 99 mass% are satisfied).

4. The anode active material for a nonaqueous electrolyte secondary battery according to claim 1 or 2, wherein the aluminum-containing metal is represented by Composition Formula (1),

$$Al_xM^1{}_yM^2{}_z \qquad ...(1)$$

   (in Formula (1), $M^1$ is one or more selected from the group consisting of Mg, Ni, Mn, Zn, Cd, and Pb, $M^2$ is an unavoidable impurity, and 0 mass% $\leq y \leq$ 8 mass% and $[x / (x + z)] \geq$ 99.9 mass% are satisfied).

5. The anode active material for a nonaqueous electrolyte secondary battery according to any one of claims 1 to 4, wherein the aluminum-containing metal is a metal foil having a thickness of 5 $\mu$m or more and 200 $\mu$m or less.

6. The anode active material for a nonaqueous electrolyte secondary battery according to any one of claims 1 to 4, wherein the aluminum-containing metal is a powder having an average particle size of 1 $\mu$m or more and 20 $\mu$m or less.

7. The anode active material for a nonaqueous electrolyte secondary battery according to any one of claims 1 to 4, wherein the aluminum-containing metal is a non-woven fabric made of aluminum fibers.

8. An anode comprising:

   the anode active material for a nonaqueous electrolyte secondary battery according to any one of claims 1 to 7.

9. A battery comprising:

   the anode according to claim 8.

10. An aluminum clad metal laminate comprising:

    a thin layer and a substrate which are laminated,
    wherein the thin layer is formed of the anode active material for a nonaqueous electrolyte secondary battery according to any one of claims 1 to 4, and

the substrate is made of a metal different from the anode active material for a nonaqueous electrolyte secondary battery.

# FIG. 1A

# FIG. 1B

# FIG. 2

# FIG. 3

## INTERNATIONAL SEARCH REPORT

| | International application No. |
|---|---|
| | PCT/JP2019/039065 |

A. CLASSIFICATION OF SUBJECT MATTER
Int.Cl. H01M4/46(2006.01)i, H01M4/134(2010.01)i, H01M10/0566(2010.01)i, C22C21/00(2006.01)n

According to International Patent Classification (IPC) or to both national classification and IPC

B. FIELDS SEARCHED

Minimum documentation searched (classification system followed by classification symbols)
Int.Cl. H01M4/46, H01M4/134, H01M10/0566, C22C21/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2014-165001 A (HONDA MOTOR CO., LTD.) 08 September 2014 & US 2014/0238550 A1 | 1-10 |
| A | JP 2003-17058 A (TOSHIBA CORP.) 17 January 2003 (Family: none) | 1-10 |
| A | JP 2003-338291 A (TOSHIBA CORP.) 28 November 2003 & US 2003/0219650 A1 | 1-10 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 December 2019 (10.12.2019) | 17 December 2019 (17.12.2019) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2019/039065 |

C (Continuation).   DOCUMENTS CONSIDERED TO BE RELEVANT

| Category* | Citation of document, with indication, where appropriate, of the relevant passages | Relevant to claim No. |
|---|---|---|
| A | WO 2014/069200 A1 (SONY CORP.) 08 May 2014 & US 2015/0280279 A1 & EP 2916380 A1 & KR 10-2015-0079605 A | 1-10 |
| A | JP 2005-347187 A (SANYO ELECTRIC CO., LTD.) 15 December 2005 (Family: none) | 1-10 |
| A | WO 2007/055172 A1 (MATSUSHITA ELECTRIC INDUSTRIAL CO., LTD.) 18 May 2007 & US 2007/0275305 A1 & CN 101142704 A | 1-10 |

Form PCT/ISA/210 (continuation of second sheet) (January 2015)

**REFERENCES CITED IN THE DESCRIPTION**

**Patent documents cited in the description**

- JP 2018192026 A
- JP H630246 B